# FASCICULE DE BREVET EUROPEEN

(11) **EP 2 721 084 B1**
(45) Date de publication et mention de la délivrance du brevet: **17.10.2018**
(21) Numéro de dépôt: 12731136.3
(22) Date de dépôt: 12.06.2012
(51) Int. Cl.: C08G 18/28, C08G 18/66, C08G 18/75, C08G 18/10, C09D 7/00, C08L 75/08

(54) **EPAISSISSANTS NON IONIQUES ASSOCIATIFS CONTENANT DES ALKYLS CYCLOHEXYLOLS, FORMULATIONS LES CONTENANT ET LEURS UTILISATIONS**
NICHT-IONISCHE ASSOZIATIVE VERDICKUNGSMITTEL MIT CYCLOHEXYLOLALKYLEN, DIESE ENTHALTENDE FORMULIERUNGEN UND IHRE VERWENDUNG
NONIONIC ASSOCIATIVE THICKENERS CONTAINING CYCLOHEXYLOL ALKYLS, FORMULATIONS CONTAINING SAME AND USES THEREOF

(30) Priorité: 14.06.2011 FR 1155156
(43) Date de publication de la demande: 23.04.2014
(73) Titulaire: COATEX, 69730 Genay (FR)
(72) Inventeur: SUAU, Jean-Marc, F-69480 Lucenay (FR); RUHLMANN, Denis, F-69730 Genay (FR)
(74) Mandataire: Balmefrezol, Ludovic Francis Pierre
(86) Numéro de dépôt international: PCT/FR2012/051315
(87) Numéro de publication internationale: WO 2012/172249

(56) Documents cités:
- EP-A1- 1 241 198
- EP-A2- 1 566 393
- WO-A1-99/11594
- WO-A1-03/022947
- WO-A2-2011/030197
- DE-A1-102006 023 001

## Description

La présente invention concerne de nouveaux épaississants associatifs appartenant à la catégorie des HEUR (Uréthane oxyde d'Ethylène modifiés Hydrophobiquement ou Hydrophobically modified Ethylene oxyde URethane). Mis en oeuvre dans des formulations aqueuses, ils permettent d'augmenter la viscosité à moyen gradient de cisaillement, tout en limitant l'augmentation de celle-ci à bas gradient de cisaillement. Un tel compromis résulte notamment de la mise en oeuvre de groupements originaux à base d'alkyl cyclohexylols, pour fabriquer le monomère associatif de ces épaississants.

Les formulations de peintures aqueuses contenant des charges minérales sont constituées d'une phase aqueuse, d'un ou plusieurs polymères en émulsion dans la phase liquide dénommés liants, de charges et/ou de pigments, d'un agent dispersant et d'adjuvants aussi divers que des tensio-actifs, des agents de coalescence, des biocides, des anti-mousses et enfin, d'au moins un agent épaississant.

Ce dernier permet de maîtriser la rhéologie des formulations aqueuses dans lesquelles il est introduit, et notamment des peintures aqueuses, tant au stade de leur fabrication, que pendant leur transport, leur stockage ou au cours de leur mise en oeuvre. La diversité des contraintes pratiques au niveau de chacune de ces étapes renvoie à une multiplicité de comportements rhéologiques différents.

On peut néanmoins résumer le besoin de l'homme du métier à l'obtention d'un effet d'épaississement de la formulation aqueuse, tant pour des raisons de stabilité au cours du temps, que pour une possible application de la peinture sur une surface verticale, l'absence d'éclaboussures au moment de la mise en oeuvre, etc... C'est pourquoi on a désigné les additifs qui contribuent à cette régulation du comportement rhéologique sous le terme d'épaississants.

Parmi ces produits, on distingue les épaississants dits « associatifs » qui sont des polymères hydrosolubles disposant de groupements hydrophobes insolubles. De telles macromolécules ont un caractère associant : une fois introduits dans l'eau, les groupements hydrophobes sont susceptibles de s'assembler sous forme d'agrégats micellaires. Ces agrégats sont reliés entre eux par les parties hydrophiles des polymères : il y a alors formation d'un réseau tridimensionnel qui provoque l'augmentation de la viscosité du milieu.

Le mécanisme de fonctionnement et les caractéristiques des épaississants associatifs sont aujourd'hui bien connus et décrits par exemple dans les documents « Rheology modifiers for water-borne paints » (Surface Coatings Australia, 1985, pp. 6-10) et « Rheological modifiers for water-based paints : the most flexible tools for your formulations » (Eurocoat 97, UATCM, vol. 1, pp 423-442).

Parmi ces épaississants associatifs, on distingue la classe des épaississants associatifs de type HEUR (Uréthane oxyde d'Ethylène modifiés Hydrophobiquement ou Hydrophobically modified Ethylene oxyde URethane selon l'acronyme anglo-saxon approprié). Ils désignent des copolymères résultant de la synthèse entre un composé du type polyalkylène glycol, un polyisocyanate, et un monomère ou condensat dit « associatif » du type alkyle, aryle ou aryalkyle constitué d'un groupe terminal hydrophobe.

Ces structures sont bien connues pour développer des viscosités élevées, pour un gradient de cisaillement moyen à faible (J. of Applied Polymer Science, vol. 58, p 209-230, 1995 ; Polymeric Mat. Sci. and Engineering, vol. 59, p 1033, 1988 ; Polymeric Mat. Sci. and Engineering, vol. 61, p 533, 1989 ; Polymeric Paint Colour Journal, vol. 176, n° 4169, p 459, June 1986), ce qui correspond respectivement aux mesures des viscosités Stormer™ (KU) et Brookfield™ (mPa.s).

Mais c'est une rhéologie plus complexe qu'on recherche, véritable compromis entre propriétés applicatives de la peinture et son comportement en pot. D'une part, on vise à augmenter la viscosité Stormer™ de la formulation : ceci a pour conséquence une meilleure stabilité de la peinture au stockage et un comportement amélioré lorsqu'on agite le produit (aspect en pot) et qu'on en prélève avec l'outil d'application (meilleur chargement du rouleau, du pinceau ou de la brosse). D'autre part, on doit limiter de manière concomitante l'augmentation de la viscosité Brookfield™ : une telle augmentation conduit à une dégradation des propriétés d'application de la peinture (limitation du tendu du film, présence d'éclaboussures).

A cette double problématique, le marché des épaississants polyuréthanes associatifs a apporté une solution dans les années 90, qui constitue une référence : l'Acrysol™ SCT-275 (DOW™). Toutefois, ce produit contient des alkyls phénols ; or, ces substances sont aujourd'hui largement suspectées d'être cancérigènes et dangereuses pour la reproduction ; encore tolérées dans l'industrie des peintures, elles n'en demeurent pas moins dans le collimateur des institutions législatives, notamment européennes.

Il existe donc un véritable besoin de mettre au point un épaississant associatif de type HEUR, permettant de résoudre le double problème technique évoqué plus haut, sans mettre en oeuvre des alkyls phénols. Pour ce faire, l'homme du métier dispose d'une très large bibliothèque de structures, qui se différencient essentiellement par le choix du monomère hydrophobe.

Le document EP 1 566 393 décrit un épaississant de type HEUR dont une des caractéristiques essentielles est la présence de n-butyl-1-octanol, alors que ses groupements hydrophobes sont à base d'alcools gras ayant de 8 à 18 atomes de carbone. Le document DE 10 2006 023001 décrit un épaississant non ionique associatif de type HEUR comprenant un alcool linéaire ramifié. Le document EP 1 241 198 décrit des agents épaississants à base de polyuréthane comprenant un monoalcool ayant de 6 à 22 atomes de carbone. Le document EP 1 013 264 décrit un épaississant polyuréthane pour des formulations cosmétiques, disposant d'un monomère associatif fonctionnalisé par un groupement hydrophobe pouvant être linéaire ou branché, mais préférentiellement linéaire et possédant de 12 à 24 atomes de carbone. Le document WO 94/06840 propose un épaississant associatif de type HEUR, caractérisé par une certaine densité de groupements hydrophobes, lesdits groupements étant des chaînes alkyles linéaires ayant de 8 à 22 atomes de carbone. Le document EP 1 584 331 propose un groupement terminal hydrophobe ayant de 6 à 34 atomes de carbone pour le monomère associatif. Pour augmenter spécifiquement la viscosité Brookfield™, le document EP 0 639 595 propose des groupements hydrophobes linéaires ayant de 4 à 36 atomes de carbone. Le document WO 02/102868 fait référence lui aussi à des structures linéaires pour le monomère associatif.

Cependant, en dehors des alkyls phénols, aucune des structures hydrophobes envisagées jusqu'à aujourd'hui ne donne satisfaction pour augmenter la viscosité Stormer™ tout en limitant l'augmentation de la viscosité Brookfield™, et réaliser ainsi un compromis optimal entre d'une part la stabilité, l'aspect en pot, le chargement de l'outil, et d'autre part les propriétés applicatives comme le tendu et l'absence d'éclaboussures.

Poursuivant ses recherches dans ce sens, la Demanderesse a constaté de manière tout à fait surprenante que l'emploi de certaines structures en lieu et place du monomère hydrophobe, conduisaient à un meilleur compromis entre une viscosité Stormer™ importante et une viscosité Brookfield™ atténuée et ce, pour un nombre d'atomes de carbone identique ou proche des structures alkyles linéaires de l'art antérieur.

Cette avancée technologique repose sur la mise en oeuvre, comme monomère hydrophobe, d'un composé dont la structure répond à la formule (I) : 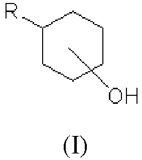 où R désigne un groupement alkyle ayant de 10 à 15 atomes de carbone. De tels composés ont été identifiés en tant qu'agents tensio-actifs et sont obtenus par hydrogénation d'un alkyl phénol. On pourra notamment se reporter au document US 6 111 146 qui décrit leur synthèse. Les composés résultants sont désignés sous l'expression d'« alkyls cyclohexylols ». Il est important d'ajouter que la structure finale n'est pas celle d'un alkyl phénol, et que le produit résultant ne sera pas catégorisé comme tel.

Ces structures sont donc utilisées pour fabriquer des polyuréthanes hydrosolubles, résultant de la condensation :
a) d'au moins un monomère de formule (I) : 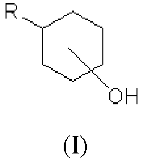 où R désigne un groupement alkyle ayant de 10 à 15 atomes de carbone, préférentiellement 12 atomes de carbone,
b) d'au moins un polyalkylène glycol, et
c) d'au moins un polyisocyanate.

Ce sont ces nouveaux polyuréthanes qui permettent par exemple d'épaissir une formulation de peinture à moyen gradient de cisaillement, tout en limitant cette augmentation à plus faible gradient, un tel comparatif étant réalisé avec des structures alkyles linéaires de l'art antérieur, ayant un nombre d'atomes de carbone très proche. Avec les épaississants selon l'invention, on est même parvenu à dépasser les performances de l'Acrysol™ SCT-275.

Aussi, un premier objet de la présente invention consiste en des polyuréthanes hydrosolubles résultant de la condensation :
a) d'au moins un monomère de formule (I) : 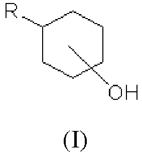 où R désigne un groupement alkyle ayant de 10 à 15 atomes de carbone, préférentiellement 12 atomes de carbone,
b) d'au moins un polyalkylène glycol, et
c) d'au moins un polyisocyanate.

Par « polyuréthane », on entend un polymère d'uréthane, c'est-à-dire d'un composé produit par la réaction d'un isocyanate et d'un alcool.

Selon l'invention, le terme « alkyle » désigne un radical hydrocarboné linéaire ou ramifié de 10 à 15 atomes de carbone, tel que, décyle, undécyle, dodécyle, tridécyle, tétradécyle ou pentadécyle.

Par « polyalkylène glycol », on entend un polymère d'un alkylène glycol dérivé d'un oxyde oléfinique. Le polyalkylène glycol selon la présente invention est par exemple le polyéthylène glycol, le polypropylène glycol, le polybutylène glycol ou un polyalkylène glycol renfermant une proportion de groupe éthylène-oxy et /ou une proportion de groupe propylène-oxy et/ou une proportion de groupe butylène-oxy. Le polyalkylène glycol selon la présente invention peut par exemple comprendre une proportion dominante de groupe éthylène-oxy en association avec une proportion secondaire de groupe propylène-oxy. Des exemples spécifiques de polymère alkylène glycol comprennent : les polyalkylènes glycols ayant un poids moléculaire moyen de 1 000, 4 000, 6000, 10 000 et 20 000 g/mol (dans le cas du polyéthylène glycol appelés PEG-1 000, PEG-4 000, PEG-6 000, PEG 10 000, PEG 20 000) ; les polyéthylène polypropylène glycols ayant un pourcentage d'oxyde d'éthylène compris entre 20 et 80 % en poids et un pourcentage d'oxyde de propylène compris entre 20 et 80 % en poids.

Par « polyisocyanate », on entend un composé qui comprend au moins 2 groupes fonctionnels isocyanate -N=C=O.

Selon un aspect de la présente invention, le monomère de formule (I) présente une formule (II) : 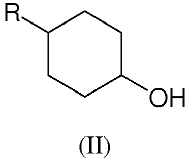 où R désigne un groupement alkyle tel que ci-dessus défini c'est-à-dire ayant de 10 à 15 atomes de carbone, de préférence 12 atomes de carbone.

Selon un autre aspect de la présente invention, le monomère a) présente une formule (I) ou (II) selon laquelle R désigne un groupement présentant 12 atomes de carbone.

Selon un autre aspect encore de la présente invention, le monomère a) présente une formule (I) ou (II) selon laquelle R désigne un groupement présentant 15 atomes de carbone.

La Demanderesse précise que la fabrication de ces polyuréthanes, qui appartiennent à la famille des épaississants de type HEUR, est parfaitement connue de l'homme du métier, qui pourra se reporter à l'enseignement des documents cités auparavant dans l'arrière plan technologique de la présente invention.

Selon un aspect de la présente invention, les polyuréthanes résultant de la condensation de :
a) de 1 % à 29 % en poids d'au moins un monomère de formule (I) ou (II), de préférence de 3 % à 7 % en poids,
b) de 70 % à 98 % en poids d'au moins un polyalkylène glycol, de préférence de 86 % à 94 % en poids, et
c) de 1 % à 29 % en poids d'au moins un polyisocyanate, de préférence de 3 % à 7 % en poids,
la somme de ces pourcentages massiques étant égale à 100 %.

Selon un autre aspect de la présente invention, les polyuréthanes résultent de la condensation de deux alcools monofonctionnels, d'un polyalkylène glycol et d'un polyisocyanate. Dans ce cas, l'un de deux alcools monofonctionnels présente une formule (I) ou (II) selon laquelle R désigne un groupement alkyle ayant de 10 à 15 atomes de carbone, de préférence 12 ou 15 atomes de carbone, et l'autre alcool monofonctionnel est de type alcool aliphatique, linéaire ou ramifié, présentant entre 6 et 20 atomes de carbone, de préférence entre 10 et 15 atomes de carbone.

Selon un aspect de la présente invention, les polyuréthanes résultent de la condensation notamment d'un polyalkylène glycol qui est le polyéthylène glycol. Il peut s'agir par exemple d'un polyéthylène glycol dont la masse moléculaire varie entre 2 000 g/mol et 20 000 g/mol, par exemple entre 8 000 g/mol et 15 000 g/mol. A titre d'exemple, on peut citer le polyéthylène glycol de masse moléculaire 10 000 g/mol et 12 000 g/mol.

Selon un autre aspect de la présente invention, les polyuréthanes résultent de la condensation notamment d'un polyisocyanate qui est choisi dans le groupe consistant en le toluène diisocyanate, les dimères toluène diisocyanate, les trimères du toluène diisocyanate, le 1,4-butane di-isocyanate, le 1,6-hexane diisocyanate, l'isophorone diisocyanate, le 1,3- cyclohexane diisocyanate, le 1,4- cyclohexane diisocyanate, le 4,4'diisocyanatodicyclohexylmethane, le 1-méthyl-2,4-diisocyanatocyclohexane, un mélange du 1-méthyl-2,4-diisocyanatocyclohexane et du 1-méthyl-2,6-diisocyanatocyclohexane, le biuret d'hexaméthylène diisocyanate, les dimères du biuret d'hexaméthylène diisocyanate, les trimères du biuret d'hexaméthylène diisocyanate et un mélange d'au moins deux de ces composés.

Un deuxième objet de la présente invention a trait à un procédé de préparation d'un polyuréthane selon l'invention, ledit procédé consistant à une condensation des différents constituants du polyuréthane.

Un troisième objet de la présente invention consiste en une composition aqueuse comprenant un polyuréthane selon la présente invention.

Selon un aspect de l'invention, la dite composition aqueuse comprend entre outre de l'eau et au moins un tensioactif non ionique. Ainsi, selon cet aspect de l'invention, le polyuréthane est formulé dans l'eau en présence d'au moins un agent tensioactif non ionique.

Par « tensioactif non ionique » ou « agent tensioactif non ionique », on entend une molécule non ionique constituée d'au moins une partie hydrophile et d'au moins une partie hydrophobe.

Selon un mode de réalisation de la présente invention, ladite composition comprend plusieurs agents tensioactifs, par exemple, deux, trois ou quatre.

Selon un autre aspect de la présente invention, la dite composition aqueuse comprend en outre au moins un additif sélectionné dans le groupe consistant en un biocide, un solvant, un agent anti-mousse, un régulateur de pH, un agent de coalescence et leurs mélanges.

Par « biocide », on entend une substance chimique destinée à détruire, repousser ou rendre inoffensifs les organismes nuisibles, à en prévenir l'action ou à les combattre de toute autre manière, par une action chimique ou biologique.

Par « agent anti-mousse », on entend une substance ou une formulation destinée à détruire les bulles d'air au sein d'un milieu liquide homogène ou hétérogène (ou à sa surface) ou à prévenir leur formation.

Par « régulateur de pH » ou « agent régulateur de pH », on entend un composé chimique qui permet d'ajuster le pH à la valeur attendue. Par exemple, l'agent régulateur de pH peut augmenter le pH ; c'est le cas des bases, telle que NaOH. Alternativement, l'agent régulateur de pH peut diminuer le pH ; c'est le cas des acides.

Par « agent de coalescence », on entend un agent utilisé dans les peintures qui permet d'abaisser la température minimum de formation du film (TMFF ou MFFT pour Minimum Film Formation Température) de peinture à une température adaptée aux conditions d'application souhaitée(s) (par exemple une TMFF de 5°C pour une application à l'extérieur). A titre d'exemple d'agent coalescent selon l'invention, on peut citer le propylène glycol, le butyl glycol, le 2,2,4-triméthyl-1,3-pentanediol monoisobutyrate ou le 2,2,4-triméthyl-1,3-pentanediol diisobutyrate.

Selon un autre aspect encore, la composition aqueuse de la présente invention consiste en :
1) 5 % à 45 % en poids d'au moins un polyuréthane selon l'invention, de préférence entre 10 et 30 % en poids,
2) 5 % à 30 % en poids d'au moins un tensioactif, de préférence entre 7 et 20 % en poids,
3) 25 % à 75 % en poids d'eau, et
4) 0 à 5 % en poids d'au moins un autre additif choisi dans le groupe consistant en un biocide, un solvant, un agent anti-mousse, un régulateur de pH, un agent de coalescence et leurs mélanges,
la somme de ces pourcentages massiques étant égale à 100 %.

Selon un autre aspect encore, la composition aqueuse de la présente invention consiste en un polyuréthane tel que décrit ci-dessus, un tensioactif, de l'eau, un biocide et un agent anti-mousse.

Selon un autre aspect de l'invention, la composition aqueuse consiste en un mélange de 5 à 45 % en poids d'au moins un polyuréthane tel que décrit ci-dessus, de 5 à 30 % en poids d'au moins un tensioactif, de 25 à 75 % en poids d'eau, de 0,01 à 5 % en poids d'au moins un biocide et de 0,01 à 5 % en poids d'au moins un agent anti-mousse.

Un quatrième objet de la présente invention a trait à un procédé de préparation d'une composition aqueuse selon l'invention, ledit procédé consistant à mélanger des différents constituants de la composition aqueuse.

Un cinquième objet de la présente invention consiste en l'utilisation d'un polyuréthane selon l'invention ou une composition aqueuse selon l'invention, pour épaissir une formulation aqueuse, ladite formulation étant sélectionnée dans le groupe consistant en parmi une peinture, une laque, un verni, une sauce de couchage papetière, une formulation cosmétique et une formulation détergente.

Un sixième objet de la présente invention a trait à une formulation aqueuse comprenant un polyuréthane selon l'invention ou une composition aqueuse selon l'invention, ladite formulation étant sélectionnée dans le groupe consistant en parmi une peinture, une laque, un verni, une sauce de couchage papetière, une formulation cosmétique et une formulation détergente.
Selon un aspect de cet objet de l'invention, la formulation aqueuse est une peinture et comprend au moins un agent dispersant, au moins une charge minérale, au moins un liant, au moins un biocide, au moins un agent anti-mousse et éventuellement un agent de coalescence.

Un dernier objet de la présente invention a trait à un procédé de préparation d'une formulation aqueuse selon l'invention, ledit procédé consistant à mélanger des différents constituants de la formulation aqueuse.

Les exemples qui suivent permettent de mieux comprendre l'invention, sans toutefois en limiter la portée.

### EXEMPLES

### Exemple 1

Cet exemple décrit un polyuréthane selon l'invention, mettant en oeuvre un composé de formule (II) où R désigne le groupement alkyle linéaire ayant 12 atomes de carbone. On a donc ici un monomère hydrophobe du type alkyle cyclohexylol ayant 18 atomes de carbone.

Parallèlement, cet exemple illustre aussi 4 polyuréthanes selon l'art antérieur, mettant en oeuvre des alcools gras linéaires ayant 12, 14, 16 et 18 atomes de carbone.

Enfin, cet exemple décrit un polyuréthane hors invention, mettant en oeuvre un composé de formule (II) où R désigne le groupement alkyle linéaire ayant 9 atomes de carbone. On a donc ici un monomère hydrophobe du type alkyle cyclohexylol ayant 15 atomes de carbone.

Tous les polyuréthanes sont des produits qui sont le résultat de la condensation de, exprimé en % en poids de chacun des constituants, 90 % de polyéthylène glycol de masse moléculaire en poids égale à 10 000 g/mol, 5 % d'un monomère terminé par un groupement hydrophobe dont on précisera par la suite la nature, et 5 % d'isophorone diisocyanate.

Enfin, tous ces polyuréthanes sont formulés dans l'eau en présence d'un tensioactif non ionique (en l'espèce, un mélange de composés C8 et C10 alcoxylés ramifiés de type commercial) (ratio en poids : 30 % de polyuréthane, 20 % de tensio-actif, 50 % d'eau). On obtient ainsi une composition aqueuse.

### Essai n° 1

Cet essai illustre un domaine hors invention et correspond à une formulation dans l'eau à 30 % en poids sec d'un polyuréthane de masse moléculaire en poids égale à environ 11 000 g/mole, où le monomère hydrophobe possède la formule (II), où R désigne le groupement alkyle linéaire ayant 9 atomes de carbone.

### Essai n° 2

Cet essai illustre l'invention et correspond à une formulation dans l'eau à 30 % en poids sec d'un polyuréthane de masse moléculaire en poids égale à environ 11 000 g/mole, où le monomère hydrophobe possède la formule (II), où R désigne le groupement alkyle linéaire ayant 12 atomes de carbone.

### Essai n° 3

Cet essai illustre l'art antérieur et correspond à une formulation dans l'eau à 30 % en poids sec d'un polyuréthane de masse moléculaire en poids égale à environ 11 000 g/mole, où le monomère hydrophobe est un alcool linéaire ayant 12 atomes de carbone, commercialisé sous le nom Nacol™ 12-96 par la société SASOL™.

### Essai n° 4

Cet essai illustre l'art antérieur et correspond à une formulation dans l'eau à 30 % en poids sec d'un polyuréthane de masse moléculaire en poids égale à environ 11 000 g/mole, où le monomère hydrophobe est un alcool linéaire ayant 14 atomes de carbone, commercialisé sous le nom Nacol™ 14-98 par la société SASOL™.

### Essai n° 5

Cet essai illustre l'art antérieur et correspond à une formulation dans l'eau à 30 % en poids sec d'un polyuréthane de masse moléculaire en poids égale à environ 11 000 g/mole, où le monomère hydrophobe est un alcool linéaire ayant 16 atomes de carbone, commercialisé sous le nom Nacol™ 16-95 par la société SASOL™.

### Essai n° 6

Cet essai illustre l'art antérieur et correspond à une formulation dans l'eau à 30 % en poids sec d'un polyuréthane de masse moléculaire en poids égale à environ 11 000 g/mole, où le monomère hydrophobe est un alcool linéaire ayant 18 atomes de carbone, commercialisé sous le nom Nacol™ 18-98 par la société SASOL™.

### Essai n° 7

Cet essai illustre l'art antérieur, et met en oeuvre l'Acrysol™ SCT-275 commercialisé par la société DOW™, qui est une solution aqueuse à 17,5 % en poids sec d'un polyuréthane associatif contenant des alkyls phénols.

### Exemple 2

Cet exemple illustre l'utilisation de polyuréthanes selon l'invention et l'art antérieur, comme agents épaississants d'une peinture mate.

La composition de ladite peinture est indiquée dans le tableau 1, les masses de chaque constituant étant indiquées en grammes.

La peinture est formulée selon les méthodes bien connues de l'homme du métier.

Dans chaque test, on met en oeuvre 0,2 % en poids sec du polymère selon l'invention, par rapport au poids total de la formulation de peinture, soit environ pour 1 kg de formulation telle que ci-dessous définie, 6,67 g d'une composition aqueuse telle que mentionnée plus haut.

**Tableau 1**

| **Constituants** | **Masse (g)** |
|---|---|
| Eau | 190 |
| Ecodis™ P50 (Coatex™) | 4 |
| Acticide MBS (Thor™) | 2 |
| Tego™ 810 (Tego™) | 1 |
| NaOH (20 %) | 1 |
| Tiona™ 568 (Millenium™) | 80 |
| Durcal™ 2 (Omya™) | 300 |
| Omyacoat™ 850 OG (Omya™) | 220 |
| Acronal™ 290 D (BASF™) | 130 |
| Monopropylène glycol | 10 |
| Texanol™ (Eastman™) | 10 |
| Eau | qsp 1 000 |

On détermine alors les viscosités résultantes, à T = 24 heures, à 25°C, à faible gradient de vitesse, viscosité Brookfield™ à 10 tours / minute, notée µ_{Bk10} (mPa.s), et à moyen gradient de vitesse, viscosité Stormer, notée µ_{S} (KU).

**Tableau 2**

| Essai n° | 1 | 2 | 3 | 4 | 5 | 6 | 7 |
|---|---|---|---|---|---|---|---|
| AA/IN | HI | IN | AA | AA | AA | AA | AA |
| Monomère associatif | C15 | C18 | C12 | C14 | C16 | C18 | SCT-275 |
| | | | | | | | |
| µ_{S} (KU) | 102 | 128 | 96 | 106 | 125 | 116 | 119 |
| | | | | | | | |
| µ_{Bk10} (mPa.s) | 3 800 | 18 000 | 3 200 | 12 000 | 20 300 | 23 900 | 13 850 |

Les résultats apparaissent dans le tableau 2.

On constate tout d'abord que c'est le polyuréthane selon l'invention (essai n° 2) qui conduit à la viscosité Stormer™ la plus élevée.

Au niveau de l'art antérieur, les essais n° 3 et 4 conduisent à des viscosités Stormer™ beaucoup plus faibles. Les essais n° 5 et 6 sont ensuite les mieux placés du point de vue de la viscosité à moyen gradient de vitesse ; or, l'essai n° 2 conduit à une valeur plus élevée, pour une viscosité Brookfield™ inférieure.

Quant à l'Acrysol™ SCT-275 (essai n° 7) qui offre un très bon compromis entre viscosité à bas et moyen gradient, il demeure moins performant en efficacité épaississante pure, en comparaison avec l'invention.

Enfin, l'essai n° 1 démontre l'importance de borner le nombre de carbone du monomère hydrophobe selon l'invention ; avec seulement 15 atomes de carbone, le polymère de l'essai n° 1 n'est pas assez efficace en terme d'épaississement pur.

### Exemple 3

Cet exemple illustre l'utilisation de polyuréthanes selon l'invention et l'art antérieur, comme agents épaississants d'une peinture mate.

La composition de ladite peinture est indiquée dans le tableau 3, les masses de chaque constituant étant indiquées en grammes.

La peinture est formulée selon les méthodes bien connues de l'homme du métier.

Dans chaque test, on met en oeuvre 0,36 % en poids sec du polymère selon l'invention, par rapport au poids total de la formulation de peinture.

**Tableau 3**

| **Constituants** | **Masse (g)** |
|---|---|
| Eau | 277 |
| Ecodis™ P50 (Coatex™) | 4 |
| Acticide MBS (Thor™) | 2 |
| Tego™ Airex 901 W (Tego™) | 1 |
| NaOH (20 %) | 0,9 |
| Tiona™ 568 (Millenium™) | 81 |
| Durcal™ 2 (Omya™) | 300,1 |
| Omyacoat™ 850 OG (Omya™) | 133 |
| Mowilith LDM 1871™ (Celanese™) | 150 |
| Tego™ 825 (Tego™) | 10 |
| Eau | qsp 1 000 |

On détermine alors les viscosités résultantes, à T = 24 heures, à 25°C, à faible gradient de vitesse, viscosité Brookfield™ à 10 tours / minute, notée µ_{Bk10} (mPa.s), et à moyen gradient de vitesse, viscosité Stormer, notée µ_{S} (KU).

**Tableau 4**

| Essai n° | 1 | 2 | 3 | 4 | 5 | 6 | 7 |
|---|---|---|---|---|---|---|---|
| AA/IN | HI | IN | AA | AA | AA | AA | AA |
| monomère associatif | C15 | C18 | C12 | C14 | C16 | C18 | SCT-275 |
| | | | | | | | |
| µ_{S} (KU) | 104 | 137 | 100 | 110 | 135 | 121 | 117 |
| | | | | | | | |
| µ_{Bk10} (mPa.s) | 10 200 | 25 000 | 8 800 | 20 000 | 36 000 | 45 000 | 17 100 |

Les résultats apparaissent dans le tableau 4.

Comme précédemment, c'est le polyuréthane selon l'invention (essai n° 2) qui conduit à la viscosité Stormer™ la plus élevée.

Au niveau de l'art antérieur, les essais n° 3 et 4 conduisent à des viscosités Stormer™ plus faibles. Les essais n° 5 et 6 sont ensuite les mieux placés du point de vue de la viscosité à moyen gradient de vitesse, mais pour une viscosité Brookfield™ bien plus élevée que selon l'invention.

Quant à l'Acrysol™ SCT-275 (essai n° 7) qui offre un très bon compromis entre viscosité à bas et moyen gradient, il demeure moins performant en efficacité épaississante pure, en comparaison avec l'invention.

Enfin, l'essai n° 1 qui conduit à un faible pouvoir épaississant, démontre l'intérêt de borner le nombre de carbone du monomère hydrophobe selon l'invention.

## Revendications

1. Polyuréthanes hydrosolubles résultant de la condensation :
a) d'au moins un monomère de formule (I) : 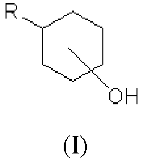 selon laquelle R désigne un groupement alkyle ayant de 10 à 15 atomes de carbone,
b) d'au moins un polyalkylène glycol, et
c) d'au moins un polyisocyanate.

2. Polyuréthanes selon la revendication 1, résultant de la condensation de :
a) un monomère de formule (I) : 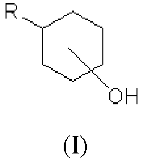 selon laquelle R désigne un groupement alkyle ayant de 10 à 15 atomes de carbone,
b) un polyalkylène glycol,
c) un polyisocyanate, et
d) un alcool aliphatique présentant entre 6 et 20 atomes de carbone.

3. Polyuréthanes selon la revendication 1, résultant de la condensation de :
a) de 1 % à 29 % en poids d'au moins un monomère de formule (I),
b) de 70 % à 98 % en poids d'au moins un polyalkylène glycol, et
c) de 1 % à 29 % en poids d'au moins un polyisocyanate,
la somme de ces pourcentages massiques étant égale à 100 %.

4. Polyuréthanes selon la revendication 1 ou 3, résultant de la condensation de :
a) de 3 % à 7 % en poids d'au moins un monomère de formule (I),
b) de 86 % à 94 % en poids d'au moins un polyalkylène glycol, et
c) de 3 % à 7 % en poids d'au moins un polyisocyanate,
la somme de ces pourcentages massiques étant égale à 100 %.

5. Polyuréthanes selon l'une quelconque des revendications précédentes, selon lesquels le polylakylène glycol est un polyéthylène glycol dont la masse moléculaire varie entre 2 000 g/mol et 20 000 g/mol.

6. Polyuréthanes selon l'une quelconque des revendications précédentes, selon lesquels ledit monomère a) présente une formule (I) selon laquelle R désigne un groupement présentant 12 atomes de carbone.

7. Polyuréthanes selon la revendication 1 ou 2, résultant de la condensation de :
a) de 1 à 29 % en poids d'un monomère de formule (II) : 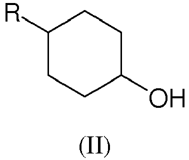 selon laquelle R désigne un groupement alkyle présentant entre 10 à 15 atomes de carbone,
b) de 70 % à 98 % en poids d'un polyalkylène glycol,
c) de 1 % à 29 % en poids d'un polyisocyanate,
la somme de ces pourcentages massiques étant égale à 100 %.

8. Composition aqueuse comprenant un polyuréthane selon l'une quelconque des revendications 1 à 7.

9. Composition aqueuse selon la revendication 8, comprenant en outre de l'eau et un tensioactif.

10. Composition aqueuse selon la revendication 8 ou 9, comprenant en outre au moins un additif sélectionné dans le groupe consistant en un biocide, un solvant, un agent anti-mousse, un régulateur de pH, un agent de coalescence et leurs mélanges.

11. Composition aqueuse selon l'une quelconque des revendications 8 à 10, contenant :
1) 5 % à 45 % en poids d'au moins un polyuréthane selon l'une quelconque des revendications 1 à 9,
2) 5 % à 30 % en poids d'au moins un tensioactif,
3) 25 % à 75 % en poids d'eau, et
4) 0 à 5 % en poids d'au moins un autre additif choisi dans le groupe consistant en un biocide, un solvant, un agent anti-mousse, un régulateur de pH, un agent de coalescence et leurs mélanges,
la somme de ces pourcentages massiques étant égale à 100 %.

12. Formulation aqueuse comprenant un polyuréthane selon l'une quelconque des revendications 1 à 7 ou une composition aqueuse selon l'une quelconque des revendications 8 à 11, ladite formulation étant sélectionnée dans le groupe consistant en parmi une peinture, une laque, un verni, une sauce de couchage papetière, une formulation cosmétique et une formulation détergente.

13. Utilisation d'un polyuréthane selon l'une quelconque des revendications 1 à 7 ou une composition aqueuse selon l'une quelconque des revendications 8 à 11, pour épaissir une formulation aqueuse, ladite formulation étant sélectionnée dans le groupe consistant en parmi une peinture, une laque, un verni, une sauce de couchage papetière, une formulation cosmétique et une formulation détergente.

14. Procédé de préparation d'un polyuréthane selon l'une quelconque des revendications 1 à 7, consistant à une condensation de ses différents constituants.

## Patentansprüche

1. Wasserlösliche Polyurethane aus der Kondensation von:
a) mindestens einem Monomer der Formel (I): 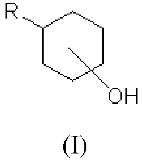 gemäß der R für eine Alkylgruppe mit 10 bis 15 Kohlenstoffatomen steht,
b) mindestens einem Polyalkylenglykol, und
c) mindestens einem Polyisocyanat.

2. Polyurethane nach Anspruch 1, aus der Kondensation von:
a) einem Monomer der Formel (I): 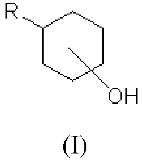 gemäß der R für eine Alkylgruppe mit 10 bis 15 Kohlenstoffatomen steht,
b) einem Polyalkylenglykol,
c) einem Polyisocyanat, und
d) einem aliphatischen Alkohol mit zwischen 6 und 20 Kohlenstoffatomen.

3. Polyurethane nach Anspruch 1, aus der Kondensation von:
a) 1 bis 29 Gew.-% mindestens eines Monomers der Formel (I),
b) 70 bis 98 Gew.-% mindestens eines Polyalkylenglykols, und
c) 1 bis 29 Gew.-% mindestens eines Polyisocyanats,
wobei die Summe der Gewichtsprozentanteile gleich 100% ist.

4. Polyurethane nach Anspruch 1 oder 3, aus der Kondensation von:
a) 3 bis 7 Gew.-% mindestens eines Monomers der Formel (I),
b) 86 bis 94 Gew.-% mindestens eines Polyalkylenglykols, und
c) 3 bis 7 Gew.-% mindestens eines Polyisocyanats,
wobei die Summe der Gewichtsprozentanteile gleich 100% ist.

5. Polyurethane nach einem der vorhergehenden Ansprüche, wobei es sich bei dem Polyalkylenglykol um ein Polyethylenglykol mit einem Molekulargewicht zwischen 2000 g/mol und 20.000 g/mol handelt.

6. Polyurethane nach einem der vorhergehenden Ansprüche, wobei das Monomer a) eine Formel (I) aufweist, gemäß der R für eine Gruppe mit 12 Kohlenstoffatomen steht.

7. Polyurethane nach Anspruch 1 oder 2, aus der Kondensation von:
a) 1 bis 29 Gew.-% eines Monomers der Formel (II): 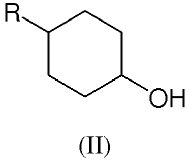 gemäß der R für eine Alkylgruppe mit zwischen 10 und 15 Kohlenstoffatomen steht,
b) 70 bis 98 Gew.-% eines Polyalkylenglykols,
c) 1 bis 29 Gew.-% eines Polyisocyanats,
wobei die Summe der Gewichtsprozentanteile gleich 100% ist.

8. Wässrige Zusammensetzung, die ein Polyurethan nach einem der Ansprüche 1 bis 7 umfasst.

9. Wässrige Zusammensetzung nach Anspruch 8, die außerdem Wasser und ein Tensid umfasst.

10. Wässrige Zusammensetzung nach Anspruch 8 oder 9, die außerdem mindestens ein Additiv aus der Gruppe bestehend aus einem Biozid, einem Lösungsmittel, einem Antischaummittel, einem pH-Regler, einem Koaleszenzmittel und Mischungen davon umfasst.

11. Wässrige Zusammensetzung nach einem der Ansprüche 8 bis 10, enthaltend:
1) 5 bis 45 Gew.-% mindestens eines Polyurethans nach einem der Ansprüche 1 bis 9,
2) 5 bis 30 Gew.-% mindestens eines Tensids,
3) 25 bis 75 Gew.-% Wasser, und
4) 0 bis 5 Gew.-% mindestens eines weiteren Additivs aus der Gruppe bestehend aus einem Biozid, einem Lösungsmittel, einem Antischaummittel, einem pH-Regler, einem Koaleszenzmittel und Mischungen davon,
wobei die Summe der Gewichtsprozentanteile gleich 100% ist.

12. Wässrige Formulierung, umfassend ein Polyurethan nach einem der Ansprüche 1 bis 7 oder eine wässrige Zusammensetzung nach einem der Ansprüche 8 bis 11, wobei die Formulierung aus der Gruppe bestehend aus einer Farbe, einem Lack, einem Klarlack, einer Papierstreichmasse, einer kosmetischen Formulierung und einer Wasch- oder Reinigungsmittelformulierung ausgewählt ist.

13. Verwendung eines Polyurethans nach einem der Ansprüche 1 bis 7 oder einer wässrigen Zusammensetzung nach einem der Ansprüche 8 bis 11 zum Verdicken einer wässrigen Formulierung, wobei die Formulierung aus der Gruppe bestehend aus einer Farbe, einem Lack, einem Klarlack, einer Papierstreichmasse, einer kosmetischen Formulierung und einer Wasch- oder Reinigungsmittelformulierung ausgewählt ist.

14. Verfahren zur Herstellung eines Polyurethans nach einem der Ansprüche 1 bis 7, bei dem man dessen verschiedenen Bestandteile kondensiert.

## Claims

1. Water soluble polyurethanes resulting from the condensation:
a) of at least one monomer of formula (I): 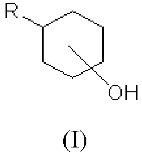 where R designates an alkyl group with 10 to 15 carbon atoms,
b) of at least one polyalkylene glycol, and
c) of at least one polyisocyanate.

2. Polyurethanes according to claim 1, resulting from the condensation of:
a) a monomer of formula (I): 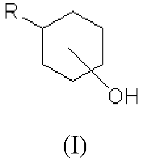 where R designates an alkyl group having 10 to 15 carbon atoms,
b) one polyalkylene glycol,
c) one polyisocyanate, and
d) one aliphatic alcohol having between 6 and 20 carbon atoms.

3. Polyurethanes according to claim 1, resulting from the condensation of:
a) 1% to 29% by weight of at least one monomer of formula (I),
b) 70% to 98% by weight of at least one polyalkylene glycol, and
c) 1% to 29% by weight of at least one polyisocyanate,
the sum of these mass percentages is equal to 100%.

4. Polyurethanes according to claim 1 or 3, resulting from the condensation of
a) 3% to 7% by weight of at least one monomer of formula (I),
b) 86% to 94% by weight of at least one polyalkylene glycol, and
c) 3% to 7% by weight of at least one polyisocyanate,
the sum of these mass percentages is equal to 100%.

5. Polyurethanes according to any of the previous claims, where the polylakylene glycol is a polyethylene glycol the molecular mass by weight of which varies between 2,000 g/mol and 20,000 g/mol.

6. Polyurethanes according to any of the previous claims, where the said monomer a) has a formula (I) where R designates a group having 12 carbon atoms.

7. Polyurethanes according to claim 1 or 2, resulting from the condensation of:
a) 1 to 29% by weight of a monomer of formula (II): 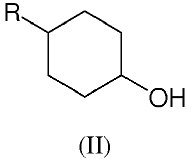 where R designates an alkyl group having between 10 and 15 carbon atoms,
b) 70% to 98% by weight of polyalkylene glycol,
c) 1% to 29% by weight of a polyisocyanate,
the sum of these mass percentages is equal to 100%.

8. Aqueous composition including a polyurethane according to any of claims 1 to 7.

9. Aqueous composition according to claim 8, also including water and a surfactant.

10. Aqueous composition according to claim 8 or 9, also including at least one additive selected from the group consisting of a biocide, a solvent, an anti-foaming agent, a pH regulator, a coalescent agent and their blends.

11. Aqueous composition according to any of the claims 8 to 10, containing:
1) 5% to 45% by weight of at least one polyurethane according to any of the claims 1 to 9,
2) 5% to 30% by weight of at least one surfactant,
3) 25% to 75% by weight of water, and
4) 0 to 5% by weight of at least one other additive chosen from the group consisting of a biocide, a solvent, an anti-foaming agent, a pH regulator, a coalescent agent and their blends,
the sum of these mass percentages is equal to 100%.

12. Aqueous formulation including a polyurethane according to any of the claims 1 to 7 or an aqueous composition according to any of the claims 8 to 11, where the said formulation is selected from the group consisting of a paint, a lacquer, a varnish, a paper coating colour, a cosmetic formulation and a detergent formulation.

13. Use of a polyurethane according to any of the claims 1 to 7 or an aqueous composition according to any of the claims 8 to 11, to thicken an aqueous formulation, where the said formulation is selected from the group consisting of a paint, a lacquer, a varnish, a paper coating colour, a cosmetic formulation and a detergent formulation.

14. Method of preparation of a polyurethane according to any of the claims 1 to 7, consisting of a condensation of its various constituents.
